# EUROPEAN PATENT SPECIFICATION

(11) **EP 2 256 361 B1**
(45) Date of publication and mention of the grant of the patent: **07.09.2011**
(21) Application number: 10159496.8
(22) Date of filing: 09.04.2010
(51) Int. Cl.: F16D 65/12

(54) **Brake disc fastening structure**
Bremsscheibenbefestigungsstruktur
Structure de fixation de disque de freinage

(30) Priority: 25.05.2009 JP 2009125510
(43) Date of publication of application: 01.12.2010
(73) Proprietor: Honda Motor Co., Ltd., Tokyo 107-8556 (JP)
(72) Inventor: Ishida, Shinichiro, Saitama 351-0193 (JP)
(74) Representative: Liska, Horst

(56) References cited:
- EP-A1- 0 474 877
- DE-A1- 2 550 893
- JP-A- 63 050 796

## Description

### Technical Field

The present invention relates to a saddle seat type vehicle according to the preamble of claim 1 having a brake disc fastening structure in a brake device.

### Background Art

A saddle seat type vehicle according to the preamble of claim 1 is known from JP 63-50796 U. This conventionally known brake device for a motorcycle is a structure of directly fixing a brake disc to a wheel by bolts. In particular, Japanese Utility Model Laid-open No. JP-63-50796 U discloses a structure of mounting a brake disc to a wheel in a floating manner in the condition that each bolt is inserted through a collar, and an elastic member is interposed between the collar and the brake disc.

DE 25 50 893 A1 and EP 0 474 877 A1 disclose further structures of mounting a brake disc to a wheel.

### Problem to be Solved by the Invention

In the above-mentioned conventional brake device, a head portion of each bolt projects laterally outside of the collar. Each bolt rotates together with the wheel, so that the head portion of each bolt occupies a part of the space present laterally outside of the brake disc over the locus of rotation of each bolt. Accordingly, the flexibility to layout of other parts on the laterally outer side of the brake disc is reduced.

It is accordingly an object of the present invention to improve the flexibility to layout of other parts on the laterally outer side of a brake disc in a brake disc fastening structure in a saddle seat type vehicle such that the brake disc is directly fastened to a wheel in a floating manner.

### Means for Solving the Problem

In accordance with the present invention, there is provided a saddle seat type vehicle having a brake disc fastening structure in a brake device such that a collar is fitted in a mounting hole of a brake disc mounted to a wheel, the collar having a cylindrical portion inserted in the mounting hole and a flange portion formed at the laterally outer end of the cylindrical portion, that a spring member is interposed between the flange portion of the collar and the brake disc, and that the brake disc is mounted to the wheel in a floating manner by a bolt extending through the collar and screwed into the wheel from the laterally outer side of the vehicle, wherein the collar further has a bottom portion formed at the laterally inner end of the cylindrical portion opposed to the wheel; and the space defined by the cylindrical portion and the bottom portion of the collar is formed as a bolt head accommodating recess for accommodating a head portion of the bolt.

With this configuration, there is provided a brake disc fastening structure such that the spring member is interposed between the flange portion of the collar and the brake disc and that the brake disc is mounted to the wheel in a floating manner by the bolt extending through the collar, wherein one end portion of the collar on the flange portion side is formed with the bolt head accommodating recess for accommodating the head portion of the bolt, so that the head portion can be accommodated in the bolt head accommodating recess of the collar. Accordingly, the head portion of the bolt does not project from the one end portion of the collar on the flange portion side, so that a space can be ensured on the laterally outer side of the brake disc over the locus of rotation of the bolt, and it is possible to improve the flexibility to layout of other parts on the laterally outer side of the brake disc.

Moreover, the wheel comprises a wheel constituting a front wheel rotatably supported through an axle to a front fork in the vehicle; the brake disc is mounted to a boss formed on a spoke of the wheel; the front fork is provided with a pin slide type caliper disposed so as to sandwich the brake disc and a caliper bracket fixed to a lower portion of the front fork for supporting the pin slide type caliper; a fixing portion of the caliper bracket fixed to the front fork and a pin bolt projected from the caliper bracket for slidably supporting the pin slide type caliper are provided between the pin slide type caliper and the axle in the radial direction of the wheel; and the locus of rotation of the bolt for fastening the brake disc to the wheel overlaps the fixing portion of the caliper bracket fixed to the lower portion of the front fork and the pin bolt as viewed in side elevation.

In this case, there is provided a brake disc fastening structure such that the brake disc is floatingly mounted to the wheel of the front wheel rotatably supported through the axle to the front fork, wherein one end portion of the collar on the flange portion side is formed with the bolt head accommodating recess for accommodating the head portion of the bolt, so that the head portion can be accommodated in the bolt head accommodating recess of the collar. Accordingly, the head portion does not project into the space between the front fork and the brake disc, so that it is possible to improve the flexibility to layout of other parts in the space between the front fork and the brake disc.

Further, in the configuration that the pin slide type caliper is supported to the caliper bracket fixed to the front fork, the locus of rotation of the bolt screwed into the boss of the spoke overlaps the fixing portion of the caliper bracket and the pin bolt, wherein the head portion of the bolt is accommodated in the bolt head accommodating recess of the collar, so that the head portion does not interfere with the location of the fixing portion of the caliper bracket and the pin bolt. Accordingly, in the configuration that the pin slide type caliper is supported to the caliper bracket fixed to the front fork, it is possible to realize a brake disc fastening structure such that the brake disc is floatingly mounted to the boss formed on the spoke of the wheel of the front wheel through the collar by the bolt.

Preferably, the depth of the bolt head accommodating recess is substantially equal to the height of the head portion of the bolt.

With this configuration, the depth of the bolt head accommodating recess is substantially equal to the height of the head portion of the bolt, so that the head portion of the bolt does not project from the flange portion of the collar in the disc fastened condition. Accordingly, the amount of projection of the head portion from the brake disc can be made substantially equal to the amount of projection of the flange portion from the brake disc, so that the head portion can be located in a space-saving structure.

Preferably, the diameter of the bolt head accommodating recess is smaller than the outer diameter of the cylindrical portion, and the depth of the bolt head accommodating recess is larger than the thickness of the flange portion.

In this case, the depth of the bolt head accommodating recess is larger than the thickness of the flange portion. Accordingly, the depth of the bolt head accommodating recess can be ensured toward the laterally inner end of the cylindrical portion beyond the thickness of the flange portion.

Preferably, the head portion of the bolt has a tapered surface, and the bottom portion of the collar has a tapered surface corresponding to the tapered surface of the head portion of the bolt.

In this case, the collar can be fastened by the tapered surface of the bolt. Accordingly, the collar can be fixed reliably not only in the axial direction of the bolt, but also in the direction perpendicular to the axis of the bolt. Further, since the tapered bearing surface of the head portion of the bolt is in close contact with the tapered surface of the collar, the collar can be positioned.

### Effect of the Invention

In the saddle seat type vehicle having a brake disc fastening structure in a brake device according to the present invention, one end portion of the collar on the flange portion side is formed with the bolt head accommodating recess for accommodating the head portion of the bolt, so that the head portion of the bolt can be accommodated in the collar. Accordingly, the head portion of the bolt does not project from the one end portion of the collar on the flange portion side, so that a space can be ensured on the laterally outer side of the brake disc over the locus of rotation of the bolt, and it is possible to improve the flexibility to layout of other parts on the laterally outer side of the brake disc.

Further, the locus of rotation of the bolt screwed into the boss of the spoke overlaps the fixing portion of the caliper bracket and a lower portion of the front fork and the pin bolt, wherein the head portion of the bolt is accommodated in the bolt head accommodating recess of the collar, so that the head portion does not interfere with the location of the fixing portion of the caliper bracket and a lower portion of the front fork and the pin bolt. Accordingly, it is possible to realize a brake disc fastening structure such that the brake disc is floatingly mounted to the boss formed on the spoke of the wheel of the front wheel through the collar by the bolt.

Further, the amount of projection of the head portion from the brake disc can be made substantially equal to the amount of projection of the flange portion from the brake disc, so that the head portion can be located in a space-saving structure.

Further, the depth of the bolt head accommodating recess can be ensured toward the laterally inner end of the cylindrical portion beyond the thickness of the flange portion.

Further, the collar can be fastened by the tapered surface of the bolt, so that the collar can be fixed reliably not only in the axial direction of the bolt, but also in the direction perpendicular to the axis of the bolt.

Further, in the brake disc fastening structure such that the brake disc is floatingly mounted to the wheel of the front wheel, one end portion of the collar on the flange portion side is formed with the bolt head accommodating recess for accommodating the head portion of the bolt. Accordingly, the head portion does not project into the space between the front fork and the brake disc, so that it is possible to improve the flexibility to layout of other parts in the space between the front fork and the brake disc.

### Brief Description of the Drawings

FIG. 1 is a right side view showing a front portion of a saddle seat type vehicle according to a first preferred embodiment of the present invention.
FIG. 2 is a right side view of a front wheel.
FIG. 3 is an enlarged side view of a brake device and its periphery.
FIG. 4 is a cross section taken along the line IV-IV in FIG. 3, showing the condition that a bolt overlaps an internally threaded portion.
FIG. 5 is an enlarged view of the bolt and its periphery shown in FIG. 4.
FIG. 6 is a cross section similar to FIG. 4, showing the condition that the bolt overlaps a pin bolt.
FIG. 7 is an enlarged sectional view similar to FIG. 5, showing a second preferred embodiment of the present invention such that a taper bolt is substituted for the bolt used in the first preferred embodiment.

### Best Mode for Carrying Out the Invention

Some preferred embodiments of the present invention will now be described with reference to the drawings. In the following description, the terms in relation to directions, such as upper, lower, front, rear, right, and left are the same as those as viewed from an operator riding on a saddle seat type vehicle according to the present invention.

### (First Preferred Embodiment)

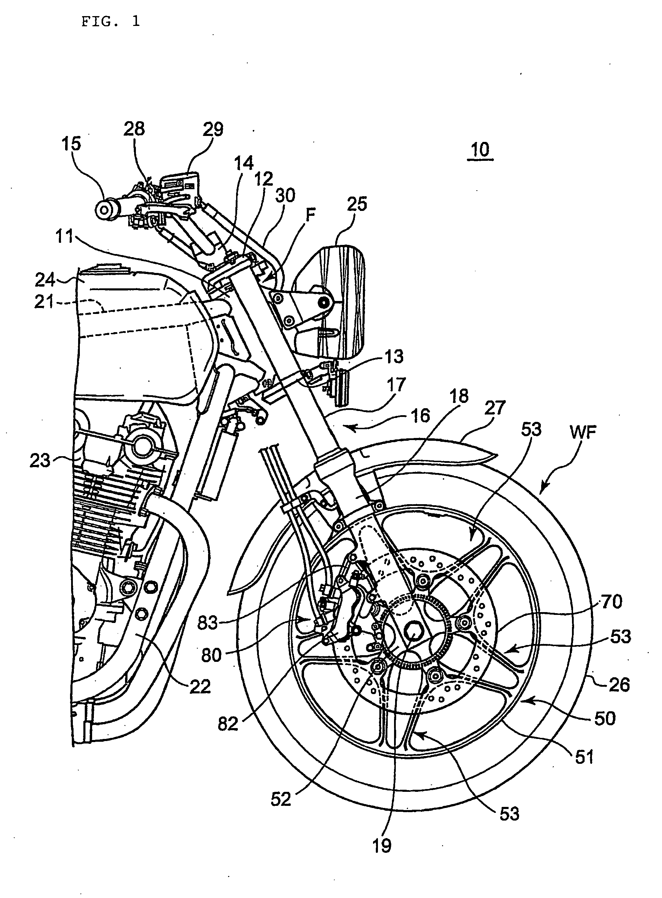

FIG. 1 is a right side view showing a front portion of a saddle seat type vehicle 10 according to a first preferred embodiment of the present invention.

The vehicle 10 has a body frame F. The body frame F includes a head pipe 11 forming a front end member, a main pipe 21 extending rearward from an upper portion of the head pipe 11, and a down pipe 22 extending obliquely downward from a lower portion of the head pipe 11 and further extending substantially horizontally toward the rear side of the vehicle 10. An engine 23 is supported between the main pipe 21 and the down pipe 22. A fuel tank 24 is located above the engine 23.

A steering shaft (not shown) is rotatably mounted in the head pipe 11. A top bridge 12 and a bottom bridge 13 are mounted at the upper end and the lower end of the steering shaft, respectively. The top bridge 12 and the bottom bridge 13 are located above and below the head pipe 11, respectively. A handle post 14 is provided on the upper end of the top bridge 12 in an integral manner, and a steering handle 15 is mounted at the upper end of the handle post 14.

A pair of right and left front forks 16 for supporting a front wheel WF are arranged in the lateral direction of the vehicle 10 and supported by the top bridge 12 and the bottom bridge 13. The front forks 16 are of a so-called normal type. That is, each front fork 16 has an inner tube 17 supported by the top bridge 12 and the bottom bridge 13 and an outer tube 18 constituting a lower portion of each front fork 16 and slidably accommodating the inner tube 17. The front wheel WF is supported by an axle 19 inserted through the lower end portions of the right and left outer tubes 18.

The front wheel WF is composed of a tire 26 and a wheel 50 on which the tire 26 is mounted. An annular brake disc 70 is mounted on the wheel 50, and a brake device 80 for braking the brake disc 70 rotating with the wheel 50 is mounted to the outer tube 18 of the right front fork 16.

A master cylinder 29 is mounted on a right end portion of the steering handle 15. The master cylinder 29 is provided with a brake lever 28. The master cylinder 29 is connected through a brake hose 30 to the brake device 80. The brake device 80 is operated by operating the brake lever 28 to change the pressure of a brake fluid.

The brake device 80 is connected both to a front/rear interlock brake system for interlocking the front and rear brakes for the front wheel WF and a rear wheel (not shown) and to an ABS system for avoiding the locking of the front and rear brakes for the front wheel WF and the rear wheel. The ABS system is connected to an ECU (not shown) and is operated by a fluid pressure generated by a power unit (not shown) driven under the control by the ECU.

A front fender 27 for covering the upper side of the front wheel WF is mounted on the right and left outer tubes 18. A headlight 25 is mounted on the front portion of the head pipe 11.

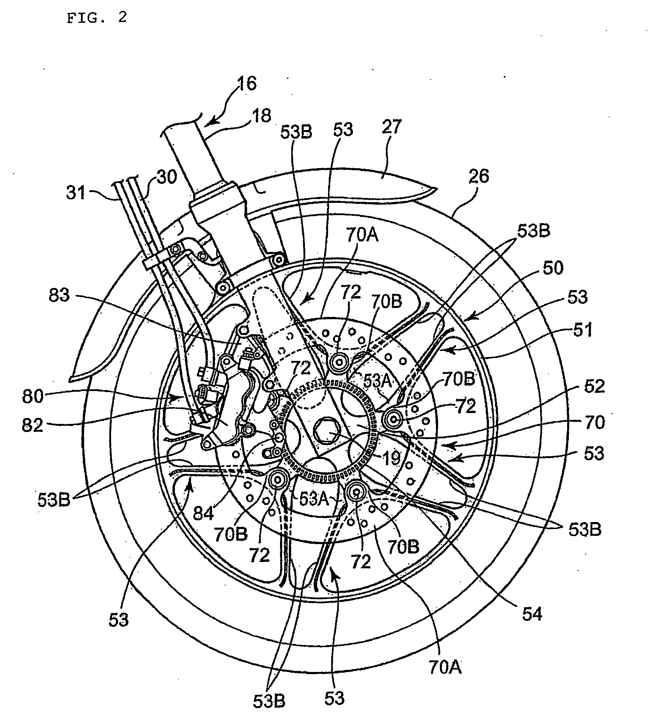

FIG. 2 is a right side view of the front wheel WF.

As shown in FIG. 2, the wheel 50 is composed of an annular rim 51 on which the tire 26 is mounted, a hub 52 supported to the axle 19 so as to be rotated on the axle 19, and a plurality of spokes 53 for connecting the rim 51 and the hub 52. The wheel 50 is an integral wheel such that the rim 51, the hub 52, and the spokes 53 are integrally formed by casting or forging.

The spokes 53 project radially outward from the outer circumference of the hub 52 located at the center of the wheel 50. More specifically, the spokes 53 are equally spaced from each other in the circumferential direction of the wheel 50. Each spoke 53 is composed of a base portion 53A projecting radially outward from the outer circumference of the hub 52 and a pair of Y-shaped arm portions 53B bifurcated from the base portion 53A and connected to the inner circumference of the rim 51.

The brake disc 70 is located between the right front fork 16 and the wheel 50 in substantially parallel relationship with the right side surface of the wheel 50. The brake disc 70 is composed of an annular disc portion 70A having a plurality of through holes and a plurality of mounting portions 70B projecting radially inward from the inner circumference of the disc portion 70A. These mounting portions 70B are equally spaced from each other in the circumferential direction of the brake disc 70 so as to respectively overlap the base portions 53A of the spokes 53.

The mounting portions 70B of the brake disc 70 are fixed to the base portions 53A of the wheel 50 by respectively tightening a plurality of bolts 72 from the laterally outer side (right side) of the vehicle 10.

The brake disc 70 is located in concentric relationship with the wheel 50 and at a radially intermediate position between the axle 19 and the rim 51.

A ringlike wheel speed sensor rotor 54 is laterally interposed between the mounting portions 70B of the brake disc 70 and the base portions 53A of the wheel 50 and fixed together with the brake disc 70 to the wheel 50 by the bolts 72. The wheel speed sensor rotor 54 is located radially inside of the inner circumference of the brake disc 70.

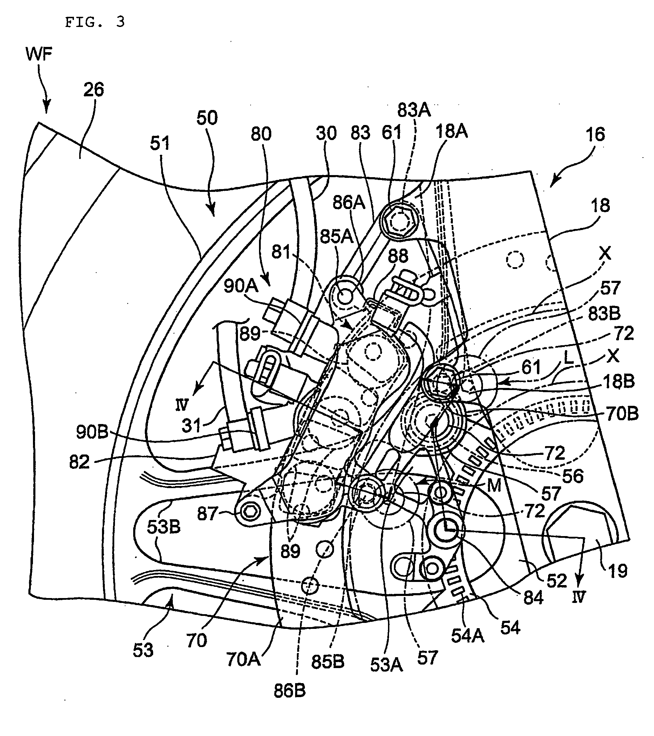

FIG. 3 is an enlarged side view of the brake device 80 and its periphery.

As shown in FIG. 3, the brake device 80 includes the brake disc 70, a pair of platelike pads 81 between which the brake disc 70 is sandwiched, a brake caliper 82 for storing the pads 81 and pressing the pads 81 against the brake disc 70 to thereby brake the brake disc 70, and a caliper bracket 83 for connecting the brake caliper 82 to the outer tube 18 of the right front fork 16.

The right outer tube 18 is formed with a pair of upper and lower mounting portions 18A and 18B projecting rearward in substantially parallel relationship with the brake disc 70. The brake caliper 82 is connected through the caliper bracket 83 to the upper and lower mounting portions 18A and 18B of the right outer tube 18. That is, the brake caliper 82 is fixed to the rear side of the right outer tube 18.

The upper mounting portion 18A is located radially outside of the outer circumference of the brake disc 70. The lower mounting portion 18B is located below the upper mounting portion 18A so as to overlap the brake disc 70 as viewed in side elevation.

The caliper bracket 83 is a platelike member elongated in the vertical direction, and it is fixed to the outer tube 18 by two bracket fixing bolts 61 inserted through the mounting portions 18A and 18B. These bracket fixing bolts 61 extend in substantially parallel relationship with the axle 19 and they are screwed into two internally threaded portions 83A and 83B (fixing portions) formed at the upper end and the intermediate portion of the caliper bracket 83.

A wheel speed sensor 84 is provided at the lower end of the caliper bracket 83 so as to be opposed to a plurality of holes 54A formed in the wheel speed sensor rotor 54. Accordingly, the wheel speed sensor 84 is adapted to detect the holes 54A of the wheel speed sensor rotor 54 rotating with the wheel 50. The ECU calculates the wheel speed (rotational condition) of the front wheel WF according to the number of the holes 54A detected by the wheel speed sensor 54 per given time period and controls the front/rear interlock brake system and the ABS system according to the wheel speed calculated above.

A pair of upper and lower pin bolts 85A and 85B for slidably supporting the brake caliper 82 are provided at an upper portion and a lower portion of the caliper bracket 83, respectively. These upper and lower pin bolts 85A and 85B project laterally outward from the right side surface of the caliper bracket 83 in substantially parallel relationship with the axle 19.

The upper pin bolt 85A is located radially outside of the outer circumference of the brake disc 70, and the lower pin bolt 85B is located below the upper pin bolt 85A so as to overlap the brake disc 70 as viewed in side elevation.

The brake caliper 82 has a pair of slide holes 86A and 86B for respectively engaging the pin bolts 85A and 85B of the caliper bracket 83. These slide holes 86A and 86B are formed at an upper portion and a lower portion of the brake caliper 82, respectively. Accordingly, the brake caliper 82 is slidable along the pin bolts 85A and 85B in the axial direction of the axle 19.

The brake caliper 82 is so arranged as to straddle the disc portion 70A of the brake disk 70 from the outer circumference thereof. The pair of platelike pads 81 mentioned above are mounted in the brake caliper 82 so as to sandwich the disc portion 70A.

A hanger pin 87 is provided at a rear portion of the brake caliper 82 so as to be inserted through the brake caliper 82 and the pads 81 in parallel to the pin bolts 85A and 85B. The pads 81 are supported in the brake caliper 82 so as to extend along the disc portion 70A. One end of each pad 81 is supported in a support groove 88 formed on the rear surface of the caliper bracket 83, and the other end is pivotably supported to the hanger pin 87. The pads 81 are slidable in the axial direction of the hanger pin 87.

The brake caliper 82 is provided with three pistons 89 for pressing the pads 81 against the disc portion 70A. These three pistons 89 are arranged in the circumferential direction of the disc portion 70A, wherein the central piston 89 is driven by a fluid pressure from the front/rear interlock brake system and the other opposite pistons 89 are driven by a fluid pressure from the master cylinder 29 produced by the operation of the brake lever 28.

Further, the brake caliper 82 is provided with a connecting portion 90A for connecting the brake hose 30 connected to the master cylinder 29 and an interlock connecting portion 90B for connecting a brake hose 31 connected to the power unit.

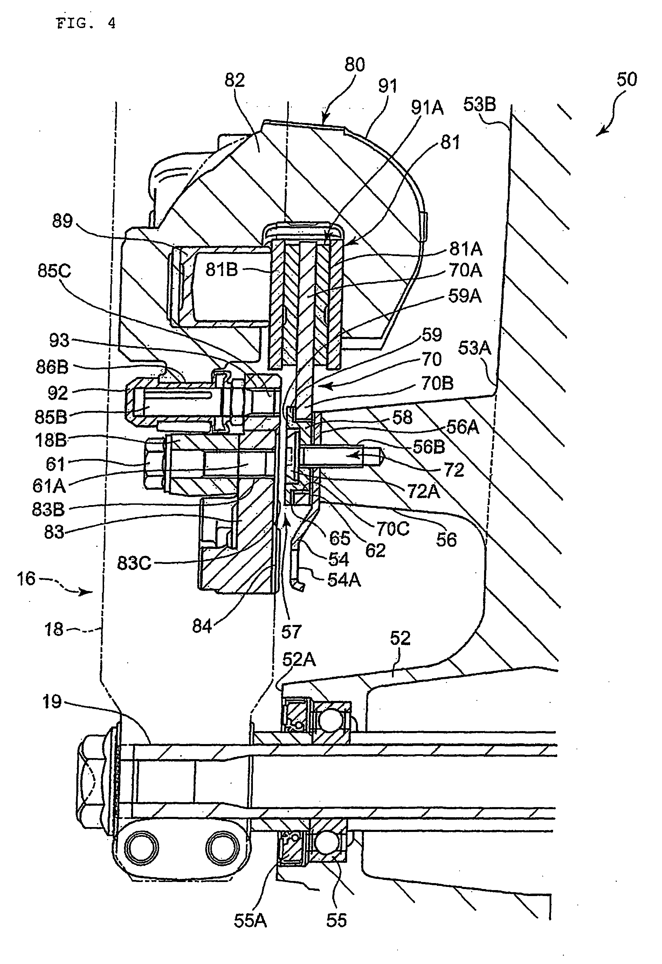

FIG. 4 is a cross section taken along the line IV-IV in FIG. 3. That is, FIG. 4 is a sectional view of the caliper bracket 83 and the brake caliper 82 as viewed in the direction perpendicular to the cross section along the line IV-IV, wherein the cross section is passed through the wheel speed sensor 84, the internally threaded portion 83B, the pin bolt 85B, and the brake caliper 82 in this order. In FIG. 4, the wheel 50 is also shown in relation to the caliper bracket 83 and the brake caliper 82. In the rotational position of the wheel 50 shown in FIG. 4, one of the bolts 72 for fastening the brake disc 70 overlaps the internally threaded portion 83B as viewed in side elevation. The rotational position of this bolt 72 is shown by reference symbol L in FIG. 3. Although FIG. 4 is a cross section showing the rear side of the outer tube 18, a part of the outer tube 18 is shown by a phantom line in FIG. 4.

As shown in FIG. 4, the wheel 50 is rotatably supported to the axle 19 fixed to the lower ends of the right and left outer tubes 18 (the left outer tube 18 being not shown). More specifically, a bearing 55 is fitted in the hub 52, and the wheel 50 is rotatably supported through the bearing 55 to the axle 19. Further, a dust seal 55A is provided laterally outside of the bearing 55.

The base portion 53A of each spoke 53 is formed with a boss 56 projecting laterally outward of the wheel 50 in substantially parallel relationship with the axle 19. Each boss 56 has a substantially circular solid cylindrical shape, and it has a flat end surface 56A. The brake disc 70 is mounted on the wheel 50 so that the mounting portions 70B of the brake disc 70 are respectively placed on the flat end surfaces 56A of the bosses 56 of the wheel 50. Further, each flat end surface 56A is formed with an internally threaded portion 56B for engaging the bolt 72.

More specifically, each mounting portion 70B of the brake disk 70 is formed with a mounting hole 70C for insertion of the bolt 72, and a cylindrical collar 57 is fitted in each mounting hole 70C. The brake disc 70 is fastened through the collars 57 to the bosses 56 by the bolts 72. The wheel speed sensor rotor 54 is sandwiched between the mounting portions 70B of the brake disc 70 and the end surfaces 56A of the bosses 56. Further, a washer 62 like a thin sheet is interposed between each mounting portion 70B (and each collar 57) and the wheel speed sensor rotor 54.

The heights of all the bosses 56 from the right side surface of the wheel 50 are substantially equal to each other, so that the brake disc 70 is supported in substantially parallel relationship with the right side surface of the wheel 50. Further, the end surface 56A of each boss 56 is positioned laterally inside of a right end surface 52A of the hub 52.

The upper and lower mounting portions 18A and 18B of the right outer tube 18 are formed at the laterally central positions of the right outer tube 18 (only the lower mounting portion 18B being shown in FIG. 4). The caliper bracket 83 is fastened to the laterally inside surfaces of the upper and lower mounting portions 18A and 18B by the bracket fixing bolts 61. Accordingly, the caliper bracket 83 is located laterally between the mounting portions 18A and 18B and the brake disc 70.

The caliper bracket 83 has a laterally inside surface 83C opposed to the brake disc 70. The laterally inside surface 83C of the caliper bracket 83 is located close to a laterally outer end 59A of each collar 57, thereby ensuring a sufficient plate thickness of the caliper bracket 83 capable of reliably supporting the brake caliper 82 bearing a large force in braking.

Further, the bracket fixing bolt 61 has an externally threaded portion 61 A engaged with the internally threaded portion 83B of the caliper bracket 83, and the pin bolt 85B has an externally threaded portion 85C engaged with an internally threaded portion 93 of the caliper bracket 83. The externally threaded portion 61A of the bracket fixing bolt 61 and the externally threaded portion 85C of the pin bolt 85B reach a position close to the laterally inside surface 83C of the caliper bracket 83, thereby ensuring sufficient fastening lengths of the externally threaded portions 61A and 85C.

The brake caliper 82 has a blocklike caliper body 91. The caliper body 91 includes each piston 89 mentioned above and a pad storing portion 91A formed as a recess for storing the pads 81. The pads 81 are thus stored in the pad storing portion 91A and they are composed of a fixed pad 81A located laterally inside of the disc portion 70A and a movable pad 81 B located laterally outside of the disc portion 70A. Each piston 89 is located so as to abut against the back surface (laterally outer surface) of the movable pad 81B.

The slide holes 86A and 86B through which the pin bolts 85A and 85B are respectively inserted are formed in the caliper body 91 on the same side as that of each piston 89 (only the slide hole 86B being shown in FIG. 4). A rubber dust boot 92 for covering a shaft portion of the pin bolt 85B is mounted on the pin bolt 85B, so that the slide hole 86B of the caliper body 91 is adapted to slide on the pin bolt 85B through the dust boot 92. The pin bolts 85A and 85B are fixed to the internally threaded portions 93 of the caliper bracket 83.

The brake caliper 82 is a pin slide type caliper such that it is slidably supported by the pin bolts 85A and 85B. More specifically, when a fluid pressure is applied to each piston 89 to thereby press the movable pad 81 B against the disc portion 70A, the caliper body 91 with the fixed pad 81 A applies a reaction force to the disc portion 70A to thereby press the fixed pad 81 A against the disc portion 70A and slide laterally outward on the pin bolts 85A and 85B. Accordingly, by driving each piston 89 on one side of the caliper body 91 of the brake caliper 82, the disc portion 70A can be clamped between the movable pad 81 B and the fixed pad 81A supported in the caliper body 91, so that the front wheel WF can be braked by the friction between the disc portion 70A and each pad 81.

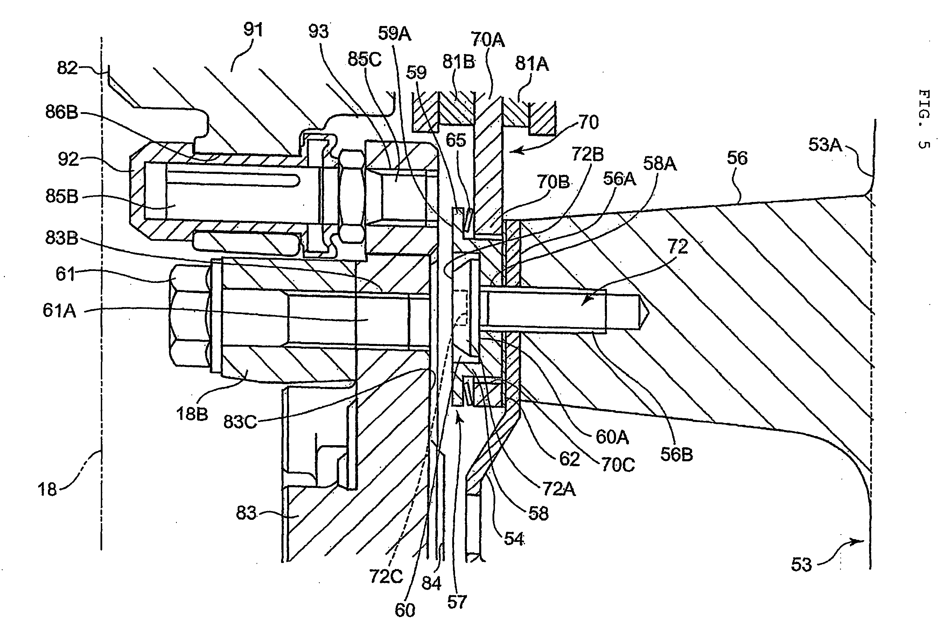

FIG. 5 is an enlarged view of the bolt 72 and its periphery shown in FIG. 4.

As shown in FIG. 5, each collar 57 has a circular cylindrical portion 58 inserted in each mounting hole 70C of the brake disc 70 and a flange portion 59 formed at the laterally outer end of the cylindrical portion 58. The outer diameter of the cylindrical portion 58 of each collar 57 is smaller than the inner diameter of each mounting hole 70C. Accordingly, even in the condition where each mounting portion 70B of the brake disc 70 is fastened to each boss 56 of the wheel 50, the cylindrical portion 58 of each collar 57 and each mounting hole 70C are relatively displaceable in the radial direction of the brake disc 70.

The cylindrical portion 58 is formed with a central hole 58A for insertion of the bolt 72. The flange portion 59 projects radially outward from the laterally outer end of the cylindrical portion 58 and functions to press the mounting portion 70B against the boss 56.

Further, a ringlike spring member 65 is interposed between the flange portion 59 and the mounting portion 70B. The spring member 65 is mounted in an elastically deformed condition such that it is elastically deformed by a given amount. Accordingly, the spring member 65 normally applies a spring force to the mounting portion 70B, thereby pressing the mounting portion 70B against the end surface 56A of the boss 56. That is, the brake disc 70 is displaceable in the axial direction of the bolt 72 against the spring force of the spring member 65.

Thus, the brake disc 70 is fastened to the wheel 50 so as to be displaceable both in the radial direction of the brake disc 70 and in the axial direction of each bolt 72. That is, the brake disc 70 is floatingly mounted to the bosses 56 of the wheel 50 by the bolts 72 inserted through the collars 57 from the laterally outer side (right side) of the vehicle.

Each collar 57 further has a bottom portion 60A formed at the laterally inner end of the cylindrical portion 58. The bearing surface of the head portion 72A of each bolt 72 abuts against the bottom portion 60A of each collar 57 on the left side opposed to the wheel 50, i.e., opposed to the end surface 56A of each boss 56. More specifically, the laterally outer end of each collar 57 on the flange portion 59 side is formed with a bolt head accommodating recess 60 recessed toward each boss 56 for accommodating the head portion 72A (bolt head) of each bolt 72. The bolt head accommodating recess 60 is a circular recess coaxial with the hole 58A as viewed in side elevation. That is, the bolt head accommodating recess 60 is a cylindrical space defined by the cylindrical portion 58 and the bottom portion 60A.

The depth of the bolt head accommodating recess 60 is substantially equal to the height of the head portion 72A. Accordingly, in the disc fastened condition where the bolt 72 is screwed into the boss 56 with the head portion 72A abutting against the bottom portion 60A of the bolt head accommodating recess 60, the top 72B of the head portion 72A is substantially flush with the laterally outer end 59A of the flange portion 59. That is, the head portion 72A of the bolt 72 does not project from the flange portion 59, but fully accommodated in the space 60 of the collar 57. Thus, each bolt 72 can be located in a space-saving structure.

The diameter of the bolt head accommodating recess 60 is smaller than the outer diameter of the cylindrical portion 58, and the depth of the bolt head accommodating recess 60 is larger than the thickness of the flange portion 59. Accordingly, the depth of the bolt head accommodating recess 60 can be ensured toward the laterally inner end of the cylindrical portion 58 beyond the thickness of the flange portion 59.

Further, each bolt 72 is provided by a hexagon socket head screw having a hexagon socket 72C at the center of the head portion 72A. Accordingly, although the head portion 72A is fully accommodated in the bolt head accommodating recess 60, the bolt 72 can be screwed and unscrewed by using a suitable tool adapted to the hexagon socket 72C.

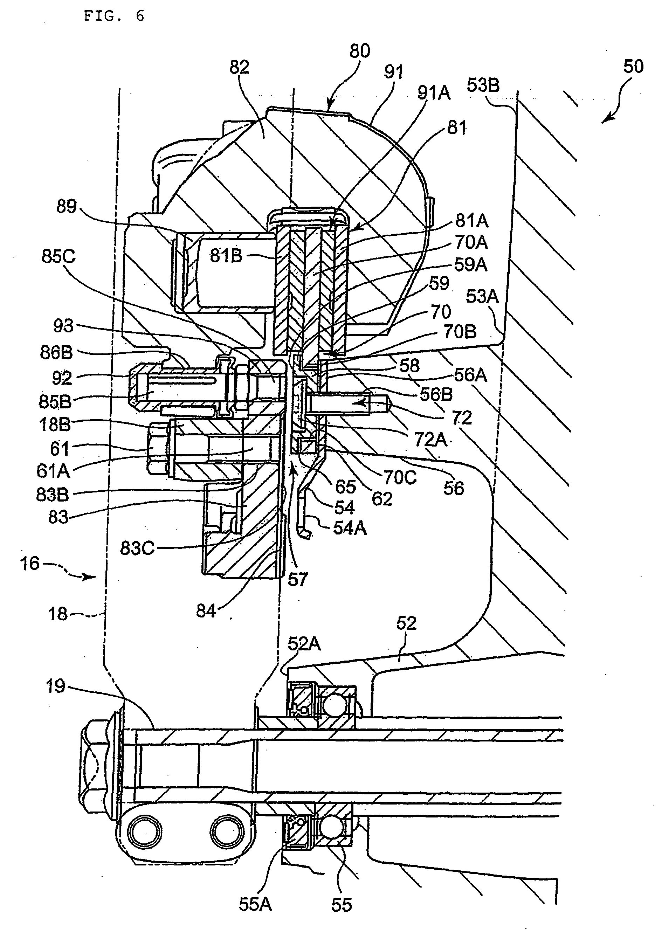

FIG. 6 is a cross section similar to FIG. 4, showing a rotational position of the wheel 50 shifted from the rotational position shown in FIG. 4 so that one of the bolts 72 for fastening the brake disc 70 overlaps the pin bolt 85B as viewed in side elevation. The rotational position of this bolt 72 is shown by reference symbol M in FIG. 3.

As shown in FIGS. 3 and 6, the internally threaded portion 83B of the caliper bracket 83 and the pin bolt 85B are located between the brake caliper 82 and the axle 19 in the radial direction of the wheel 50.

When the wheel 50 is rotated by the rotation of the front wheel WF, each bolt 72 and each collar 57 for fastening the brake disc 70 to the wheel 50 are rotated along an annular locus of rotation defined between two circular phantom lines X in FIG. 3. This locus of rotation of each bolt 72 and each collar 57 overlaps the internally threaded portion 83B and the pin bolt 85B as viewed in side elevation.

When each mounting portion 70B is passed near the internally threaded portion 83B by the rotation of the wheel 50 as shown in FIGS. 3 and 4, the head portion 72A of each bolt 72 comes close to the internally threaded portion 83B and the bracket fixing bolt 61 engaged therewith. In this rotational position, the head portion 72A overlaps the internally threaded portion 83B and its associated bracket fixing bolt 61 as viewed in side elevation and passes near the laterally inside surface 83C of the caliper bracket 83.

On the other hand, when each mounting portion 70B is passed near the pin bolt 85B by the rotation of the wheel 50 as shown in FIGS. 3 and 6, the head portion 72A and each collar 57 come close to the pin bolt 85B and the internally threaded portion 93. In this rotational position, the head portion 72A overlaps the pin bolt 85B and the internally threaded portion 93 as viewed in side elevation and passes near the laterally inside surface 83C of the caliper bracket 83.

In this preferred embodiment, the head portion 72A of each bolt 72 is fully accommodated in the bolt head accommodating recess 60 of each collar 57. That is, the head portion 72A of each bolt 72 does not project laterally outward from the flange portion 59 of each collar 57. Accordingly, although each bolt 72 overlaps the internally threaded portion 83B and the pin bolt 85B during the rotation of the wheel 50 as shown by the locus of rotation defined between the phantom lines X in FIG. 3, a space can be ensured on the laterally outer side of the brake disc 70, so that the head portion 72A does not interfere with the location of the caliper bracket 83, the internally threaded portion 83B, and the pin bolt 85B.

Accordingly, the laterally inside surface 83C of the caliper bracket 83 can be set close to the laterally outer side of the brake disc 70, thereby ensuring the strength and rigidity of the caliper bracket 83 and locating the internally threaded portion 83B, the bracket fixing bolt 61, the pin bolt 85B, and the internally threaded portion 93 in the caliper bracket 83.

It may be considered that the brake disc 70 is shifted laterally inward and the brake caliper 82 is extended laterally inward in order to locate the head portion 72A between the caliper bracket 83 and the brake disc 70. However, in this preferred embodiment, it is unnecessary to extend the brake caliper 82 laterally inward, so that an increase in size of the brake caliper 82 can be avoided.

According to this preferred embodiment as described above, there is provided a brake disc fastening structure such that the spring member 65 is interposed between the flange portion 59 of the collar 57 and the brake disc 70 and that the brake disc 70 is mounted to the wheel 50 in a floating manner by the bolt 72 extending through the collar 57, wherein one end portion of the collar 57 on the flange portion 59 side is formed with the bolt head accommodating recess 60 for accommodating the head portion 72A of the bolt 72, so that the head portion 72A can be accommodated in the bolt head accommodating recess 60 of the collar 57. Accordingly, the head portion 72A does not project from the one end portion of the collar 57 on the flange portion 59 side, so that a space can be ensured on the laterally outer side of the brake disc 70 over the locus of rotation of the bolt 72, and it is possible to improve the flexibility to layout of other parts including the caliper bracket 83 having the internally threaded portion 83B and the pin bolt 85B on the laterally outer side of the brake disc 70.

The depth of the bolt head accommodating recess 60 is substantially equal to the height of the head portion 72A, so that the head portion 72A does not project from the flange portion 59 of the collar 57 in the disc fastened condition. Accordingly, the amount of projection of the head portion 72A from the brake disc 70 can be made substantially equal to the amount of projection of the flange portion 59 from the brake disc 70, so that the head portion 72A can be located in a space-saving structure.

Further, the depth of the bolt head accommodating recess 60 is larger than the thickness of the flange portion 59. Accordingly, the depth of the bolt head accommodating recess 60 can be ensured toward the laterally inner end of the cylindrical portion 58 beyond the thickness of the flange portion 59.

Further, in a brake disc fastening structure such that the brake disc 70 is floatingly mounted to the wheel 50 of the front wheel WF rotatably supported through the axle 19 to the outer tubes 18 of the front forks 16, one end portion of the collar 57 on the flange portion 59 side is formed with the bolt head accommodating recess 60 for accommodating the head portion 72A of each bolt 72, so that the head portion 72A can be accommodated in the bolt head accommodating recess 60 of the collar 57. Accordingly, the head portion 72A does not project into the space between the right outer tube 18 and the brake disc 70, so that it is possible to improve the flexibility to layout of other parts including the caliper bracket 83 having the internally threaded portion 83B and the pin bolt 85B in the space between the right outer tube 18 and the brake disc 70.

Further, in the configuration that the pin slide type brake caliper 82 is supported to the caliper bracket 83 fixed to the outer tube 18 of the right front fork 16, the locus of rotation of the head portion 72A of each bolt 72 screwed into the boss 56 of each spoke 53 overlaps the internally threaded portion 83B of the caliper bracket 83 and the pin bolt 85B, wherein the head portion 72A of each bolt 72 is accommodated in the bolt head accommodating recess 60 of each collar 57, so that the head portion 72A does not interfere with the location of the internally threaded portion 83B and the pin bolt 85B. Accordingly, in the configuration that the pin slide type brake caliper 82 is supported to the caliper bracket 83 fixed to the outer tube 18 of the right front fork 16, it is possible to realize a brake disc fastening structure such that the brake disc 70 is floatingly mounted to the boss 56 formed on each spoke 53 of the wheel 50 of the front wheel WF through each collar 57 by each bolt 72.

The above preferred embodiment of the present invention is merely illustrative and the present invention is not limited to this preferred embodiment.

For example, while the caliper bracket 83 is fixed to the right outer tube 18 as a lower portion of the normal type right front fork 16 in this preferred embodiment, the present invention is not limited to this configuration. For example, the caliper bracket 83 may be fixed to an inner tube as a lower portion of an inverted type front fork. Further; the other detailed configurations may be arbitrarily modified.

### (Second Preferred Embodiment)

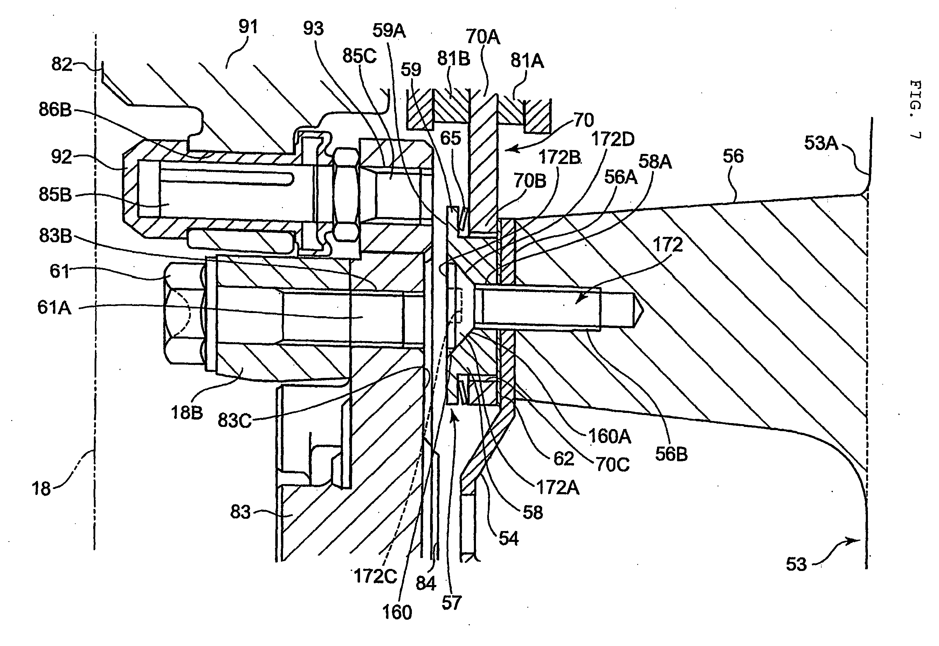

A second preferred embodiment of the present invention will now be described with reference to FIG. 7.

In the second preferred embodiment, parts similar to those in the first preferred embodiment are denoted by the same reference numerals and the description thereof will be omitted herein.

The second preferred embodiment is different from the first preferred embodiment in that a taper bolt 172 (bolt) for fastening the brake disc 70 to each boss 56 is used in place of each bolt 72.

FIG. 7 is an enlarged sectional view similar to FIG. 5, showing the configuration of the second preferred embodiment that the taper bolt 172 is replaced by the bolt 72.

The taper bolt 172 is a bolt such that the bearing surface 172D of the head portion 172A is tapered toward the front end of the tapered bolt 172. A hexagon socket 172C is formed at the center of the head portion 172A.

Further, each collar 57 in the first preferred embodiment is replaced by a collar 157 inserted in each mounting hole 70C of the brake disc 70. The collar 157 is formed with a bolt head accommodating recess 160 for accommodating the head portion 172A. The bolt head accommodating recess 160 has a bottom portion 160A abutting against the tapered bearing surface 172D of the taper bolt 172. Accordingly, this bottom portion 160A has a tapered shape corresponding to the tapered shape of the bearing surface 172D in such a manner that when the taper bolt 172 is tightened, the tapered bearing surface 172D comes into close contact with the tapered bottom portion 160A of the collar 157.

The depth of the bolt head accommodating recess 160 is substantially equal to the height of the head portion 172A. Accordingly, in the disc fastened condition where the taper bolt 172 is screwed into the boss 56 with the head portion 172A abutting against the bottom portion 160A of the collar 157, the top 172B of the head portion 172A is substantially flush with the laterally outer end 59A of the flange portion 59. That is, the head portion 172A does not project from the flange portion 59, but fully accommodated in the space of the collar 157. Thus, each taper bolt 172 can be located in a space-saving structure.

According to the second preferred embodiment, the collar 157 can be fastened by the taper bolt 172 in the condition where the tapered bearing surface 172D comes into close contact with the tapered bottom portion 160A. Accordingly, the collar 157 can be fixed more reliably not only in the axial direction of the taper bolt 172, but also in the direction perpendicular to the axis of the taper bolt 172, i.e., in the rotational direction of the brake disc 70. Further, since the tapered bearing surface 172D of the head portion 172A of the taper bolt 172 is in close contact with the tapered bottom portion 160A of the collar 157, the collar 157 can be positioned.

The invention is directed to improve the flexibility to layout of other parts on the laterally outer side of a brake disc in a brake disc fastening structure in a saddle seat type vehicle such that the brake disc is directly fastened to a wheel in a floating manner.

Disclosed herein is a brake disc fastening structure in a saddle seat type vehicle such that a collar 57 is fitted in a mounting hole 70C of a brake disc 70 mounted to a wheel, the collar 57 having a cylindrical portion 58 inserted in the mounting hole 70C and a flange portion 59 formed at the laterally outer end of the cylindrical portion 58, that a spring member 65 is interposed between the flange portion 59 and the brake disc 70, and that the brake disc 70 is mounted to the wheel in a floating manner by a bolt 72 extending through the collar 57 and screwed into the wheel from the laterally outer side of the vehicle. The collar 57 further has a bottom portion 60A formed at the laterally inner end of the cylindrical portion 58 opposed to the wheel. The space defined by the cylindrical portion 58 and the bottom portion 60A of the collar 57 is formed as a bolt head accommodating recess 60 for accommodating a head portion 72A of the bolt 72.

## Claims

1. A saddle seat type vehicle (10) having a brake disc fastening structure in a brake device such that a collar (57) is fitted in a mounting hole (70C) of a brake disc (70) mounted to a wheel (50), said collar (57) having a cylindrical portion (58) inserted in said mounting hole (70C) and a flange portion (59) formed at the laterally outer end of said cylindrical portion (58), that a spring member (65) is interposed between said flange portion (59) of said collar (57) and said brake disc (70), and that said brake disc (70) is mounted to said wheel (50) in a floating manner by a bolt (72) extending through said collar (57) and screwed into said wheel (50) from the laterally outer side of the vehicle, wherein:
said collar (57) further has a bottom portion (60A, 160A) formed at the laterally inner end of said cylindrical portion (58) opposed to said wheel (50); and
the space defined by said cylindrical portion (58) and said bottom portion (60A, 160A) of said collar (57) is formed as a bolt head accommodating recess (60, 160) for accommodating a head portion (72A, 172A) of said bolt (72), wherein:
said wheel (50) comprises a wheel constituting a front wheel (WF) rotatably supported through an axle (19) to a front fork (16) in said vehicle (10); and
said brake disc (70) is mounted to a boss (56) formed on a spoke (53) of said wheel (50),
**characterized in that**
said front fork (16) is provided with a pin slide type caliper (82) disposed so as to sandwich said brake disc (70) and a caliper bracket (83) fixed to a lower portion of said front fork (16) for supporting said pin slide type caliper (82);
a fixing portion (83B) of said caliper bracket (83) fixed to said front fork (16) and a pin bolt (85B) projected from said caliper bracket (83) for slidably supporting said pin slide type caliper (82) are provided between said pin slide type caliper (82) and said axle in the radial direction of said wheel (50); and
the locus of rotation (X) of said bolt (72) for fastening said brake disc (70) to said wheel (50) overlaps said fixing portion (83B) of said caliper bracket (83) fixed to the lower portion of said front fork (16) and said pin bolt (85B) as viewed in side elevation.

2. The saddle seat type vehicle (10) according to claim 1, wherein the depth of said bolt head accommodating recess (60, 160) is substantially equal to the height of said head portion (72A, 172A) of said bolt (72).

3. The saddle seat type vehicle (10) according to claim 1 or 2, wherein the diameter of said bolt head accommodating recess (60, 160) is smaller than the outer diameter of said cylindrical portion (58), and the depth of said bolt head accommodating recess (60, 160) is larger than the thickness of said flange portion (59).

4. The saddle seat type vehicle (10) according to any one of claims 1 to 3, wherein said head portion (72A, 172A) of said bolt (72) has a tapered surface, and said bottom portion (60A, 160A) of said collar (57) has a tapered surface corresponding to the tapered surface of said head portion (72A, 172A) of said bolt (72).

## Patentansprüche

1. Fahrzeug (10) vom Sattelsitztyp mit einer Bremsscheibenbefestigungsstruktur in einer Bremseinrichtung, derart, dass ein Bund (57) in ein Montageloch (70C) von einer Bremsscheibe (70) eingesetzt ist, welche an ein Rad (50) montiert ist, wobei der Bund (57) einen zylindrischen Abschnitt (58) hat, welcher in das Montageloch (70C) eingesetzt ist, und einen Flanschabschnitt (59) hat, welcher an dem lateral äußeren Ende von dem zylindrischen Abschnitt (58) ausgebildet ist, dass ein Federelement (65) zwischen dem Flanschabschnitt (59) von dem Bund (57) und der Bremsscheibe (70) angeordnet ist, und dass die Bremsscheibe (70) an dem Rad (50) in einer schwimmenden Weise durch einen Bolzen (72) montiert ist, welcher sich durch den Bund (57) erstreckt und von der lateral äußeren Seite des Fahrzeugs in das Rad (50) geschraubt ist, wobei:
der Bund (57) ferner einen Bodenabschnitt (60A, 160A) hat, welcher an dem lateral inneren Ende von dem zylindrischen Abschnitt (58) gegenüber dem Rad (50) ausgebildet ist; und
der Raum, welcher von dem zylindrischen Abschnitt (58) und dem Bodenabschnitt (60A, 160A) von dem Bund (57) definiert ist, als eine Bolzenkopf-Aufnahmeausnehmung (60, 160) ausgebildet ist, um einen Kopfabschnitt (72A, 172A) von dem Bolzen (72) aufzunehmen, wobei:
das Rad (50) ein Rad umfasst, welches ein Vorderrad (WF) bildet, welches durch eine Achse (19) drehbar an einer Vordergabel (16) an dem Fahrzeug (10) gelagert ist; und
die Bremsscheibe (70) an eine Nabe (56) montiert ist, welche an einer Speiche (53) von dem Rad (50) ausgebildet ist, **dadurch gekennzeichnet, dass**
die Vordergabel (16) versehen ist mit einem Bremssattel (82) vom Stiftgleittyp, welcher derart angeordnet ist, dass er die Bremsscheibe (70) zwischen sich aufnimmt, und einer Bremssattelhalterung (83), welche an einem unteren Abschnitt von der Vordergabel (16) fixiert ist, um den Bremssattel (82) vom Stiftgleittyp abzustützen;
ein Befestigungsabschnitt (83B) von der Bremssattelhalterung (83), welche an der Vordergabel (16) befestigt ist, und ein Stiftbolzen (85B), welcher von der Bremssattelhalterung (83) vorsteht, um den Bremssattel (82) vom Stiftgleittyp verschieblich abzustützen, zwischen dem Bremssattel (82) vom Stiftgleittyp und der Achse in der radialen Richtung des Rads (50) vorgesehen sind; und
die Dreh-Ortskurve (X) des Bolzens (72) zur Befestigung der Bremsscheibe (70) an dem Rad (50) den Befestigungsabschnitt (83B) von der Bremssattelhalterung (83), welche an dem unteren Abschnitt von der Vordergabel (16) befestigt ist, und den Stiftbolzen (85B), in einer Seitenansicht gesehen, überlappt.

2. Fahrzeug (10) vom Sattelsitztyp nach Anspruch 1, wobei die Tiefe der Bolzenkopf-Aufnahmeausnehmung (60, 160) im wesentlichen der Höhe des Kopfabschnitts (72A, 172A) des Bolzens (72) gleicht.

3. Fahrzeug (10) vom Sattelsitztyp nach Anspruch 1 oder 2, wobei der Durchmesser von der Bolzenkopf-Aufnahmeausnehmung (60, 160) kleiner ist als der Außendurchmesser von dem zylindrischen Abschnitt (58), und die Tiefe von der Bolzenkopf-Aufnahmeausnehmung (60, 160) größer ist als die Dicke von dem Flanschabschnitt (59).

4. Fahrzeug (10) vom Sattelsitztyp nach einem der Ansprüche 1 bis 3, wobei der Kopfabschnitt (72A, 172A) von dem Bolzen (72) eine verjüngte Oberfläche hat, und der Bodenabschnitt (60A, 160A) von dem Bund (57) eine verjüngte Oberfläche hat, welche der verjüngten Oberfläche des Kopfabschnitts (72A, 172A) von dem Bolzen (72) entspricht.

## Revendications

1. Véhicule de type à siège selle (10) ayant une structure de fixation de disque de frein dans un dispositif de frein, de sorte qu'un collier (57) est adapté dans un trou de montage (70C) d'un disque de frein (70) monté sur une roue (50), ledit collier (57) ayant une portion cylindrique (58) insérée dans ledit trou de montage (70C) et une portion de bride (59) formée au niveau de l'extrémité latéralement externe de ladite portion cylindrique (58), qu'un organe de ressort (65) est interposé entre ladite portion de bride (59) dudit collier (57) et ledit disque de frein (70), et que ledit disque de frein (70) est monté sur ladite roue (50) de manière flottante par un boulon (72) s'étendant à travers ledit collier (57) et vissé dans ladite roue (50) à partir du côté latéralement externe du véhicule, où :
ledit collier (57) comporte en outre une portion de base (60A, 160A) formée au niveau de l'extrémité latéralement interne de ladite portion cylindrique (58) opposée à ladite roue (50) ; et
l'espace défini par ladite portion cylindrique (58) et ladite portion de base (60A, 160A) dudit collier (57) est formé comme une tête de boulon logeant un évidement (60, 160) destiné à recevoir une portion de tête (72A, 172A) dudit boulon (72), où :
ladite roue (50) comprend une roue constituant une roue avant (WF) supportée avec faculté de rotation par l'intermédiaire d'un axe (19) sur une fourche avant (16) dans ledit véhicule (10) ; et
ledit disque de frein (70) est monté sur un bossage (56) formé sur un rayon (53) de ladite roue (50),
**caractérisé en ce que**
ladite fourche avant (16) est munie d'un étrier de type à axe coulissant (82) disposé de façon à prendre en sandwich ledit disque de frein (70) et un support d'étrier (83) fixé à une portion inférieure de ladite fourche avant (16) pour supporter ledit étrier de type à axe coulissant (82) ;
une portion de fixation (83B) dudit support d'étrier (83) fixée à ladite fourche avant (16) et un boulon d'axe (85B) faisant saillie à partir dudit support d'étrier (83) pour supporter avec faculté de coulissement ledit étrier de type à axe coulissant (82) sont prévus entre ledit étrier de type à axe coulissant (82) et ledit axe dans la direction radiale de ladite roue (50) ; et
le lieu de rotation (X) dudit boulon (72) pour fixer ledit disque de frein (70) à ladite roue (50) chevauche ladite portion de fixation (83B) dudit support d'étrier (83) fixée à la portion de ladite fourche avant (16) et ledit boulon d'axe (85B), vu de profil.

2. Véhicule de type à siège selle (10) selon la revendication 1, dans lequel la profondeur dudit évidement de logement de tête de boulon (60, 160) est sensiblement égale à la hauteur de ladite portion de tête (72A, 172A) dudit boulon (72).

3. Véhicule de type à siège selle (10) selon la revendication 1 ou 2, dans lequel le diamètre dudit évidement de logement de tête de boulon (60, 160) est plus petit que le diamètre externe de ladite portion cylindrique (58), et la profondeur dudit évidement de logement de tête de boulon (60, 160) est plus grande que l'épaisseur de ladite portion de bride (59).

4. Véhicule de type à siège selle (10) selon l'une quelconque des revendications 1 à 3, dans lequel ladite portion de tête (72A, 172A) dudit boulon (72) présente une surface évasée, et ladite portion de base (60A, 160A) dudit collier (57) a une surface évasée correspondant à la surface évasée de ladite portion de tête (72A, 172A) dudit boulon (72).
